# FASCICULE DE BREVET EUROPEEN

(11) **EP 3 470 615 B1**
(45) Date de publication et mention de la délivrance du brevet: **20.05.2020**
(21) Numéro de dépôt: 18200629.6
(22) Date de dépôt: 16.10.2018
(51) Int. Cl.: E06B 9/86, G05B 19/425, E06B 9/68

(54) **PROCÉDÉ DE RÉGLAGE D'UNE INSTALLATION DE VOLET ROULANT MUNIE D'UN VERROU ET INSTALLATION DE VOLET ROULANT**
VERFAHREN ZUR REGULIERUNG EINER MIT EINEM SCHLOSS AUSGESTATTETEN ROLLLADENANLAGE UND ROLLLADENANLAGE
METHOD FOR ADJUSTING A ROLLER SHUTTER INSTALLATION PROVIDED WITH A LOCK AND ROLLER SHUTTER INSTALLATION

(30) Priorité: 16.10.2017 FR 1759703
(43) Date de publication de la demande: 17.04.2019
(73) Titulaire: SOMFY ACTIVITES SA, 74300 Cluses (FR)
(72) Inventeur: SPADONI, Graziano, 40068 San Lazzaro di Savena (IT); ROSSINI, Riccardo, 40013 Castelmaggiore (IT)
(74) Mandataire: Bugnion Genève

(56) Documents cités:
- EP-A1- 1 510 649
- EP-A1- 1 650 625
- EP-A2- 1 319 795

## Description

L'invention concerne le domaine des installations d'éléments enroulables motorisées. Elle concerne plus particulièrement un procédé de réglage d'une installation d'un élément enroulable, ou volet roulant, munie de moyens de verrouillage.

Les installations d'éléments enroulables motorisées connues comprennent en général un élément enroulable ou écran, tel qu'un tablier formé de lames articulées ou un ensemble comprenant une toile et une barre de charge, enroulable via des moyens d'entraînement motorisés autour d'un tube d'enroulement situé dans la partie supérieure de l'installation. La lame inférieure située à l'extrémité inférieure du tablier ou la barre de charge de la toile, est guidé par des rails situés de part et d'autre d'une ouverture à masquer. Cette lame inférieure peut être déplacée entre une position extrême inférieure, par exemple en contact avec un seuil de l'ouverture et une position extrême supérieure, par exemple au niveau d'un caisson dans lequel s'enroule l'écran. Ces installations peuvent comprendre également des moyens de verrouillage permettant de maintenir la lame inférieure ou la barre de charge de l'écran dans une position déterminée tout en évitant que celle-ci ne soit soulevée par effraction ou claque sous les actions du vent. De telles installations sont notamment utilisées pour des volets offrant une position de ventilation sécurisée, les lames étant écartées les unes des autres et étant écartées du seuil de l'ouverture.

A cet effet, les moyens de verrouillage de telles installations sont configurés de sorte que lors du déroulement de l'élément enroulable, la lame inférieure du volet à lames articulées ou la barre de charge d'une toile entre dans le moyen de verrouillage, puis, à la suite d'un mouvement inverse d'enroulement, se bloque dans le moyen de verrouillage. Pour déverrouiller et ouvrir de nouveau le volet, il est nécessaire de d'abord déplacer la lame inférieure ou la barre de charge dans le sens du déroulement jusqu'à une certaine position avant de pouvoir enrouler l'élément enroulable.

Ces différents déplacements sont de préférence effectués de manière motorisée. Un actionneur est généralement placé dans le tube d'enroulement et répond à des ordres émanant d'un utilisateur par l'intermédiaire d'une interface de commande telle qu'une télécommande ou une interface murale. L'actionneur comprend un moteur et un réducteur ainsi qu'une unité électronique de commande comprenant des moyens électriques ou électroniques de gestion du mouvement de l'écran en fonction des ordres reçus et en fonction d'événements détectés. Ces moyens électriques ou électroniques peuvent, pour ce faire, comprendre des détecteurs ou des capteurs de position, de couple ou de temps de parcours. De tels dispositifs sont décrits par exemple dans les documents suivants : EP 1 319 795 ou EP 1 650 625.

On connaît en effet de la demande EP 1 650 625 un procédé d'apprentissage des positions d'un dispositif de verrouillage permettant de gérer automatiquement les manœuvres d'un élément enroulable en fonction des ordres reçus de l'utilisateur. Le procédé d'apprentissage définit plusieurs positions. Une première position correspond à la fin de course haute de l'élément enroulable, une deuxième position correspond à la position dite de verrouillage, une troisième position correspond à la position dans laquelle le mouvement de l'élément enroulable doit être inversé de manière à activer le moyen de verrouillage et une quatrième position correspond à la position dite de déverrouillage en dessous de laquelle il faut se déplacer pour déverrouiller l'élément enroulable.

Au cours du procédé d'apprentissage, l'installateur procède à l'enregistrement de la valeur d'une position angulaire choisie, dite position d'inversion de rotation enregistrée. Cette position est située, dans le sens de déroulement de l'élément enroulable, au niveau ou au-delà de la troisième position (position d'inversion de rotation). A cet effet, l'utilisateur doit placer la lame inférieure du volet ou la barre de charge de la toile dans une zone repérée par des marquages sur les rails de guidage ou les moyens de verrouillage.

Le procédé décrit dans EP 1 650 625 permet de faciliter les opérations de définition des positions des moyens de verrouillage de l'installation en limitant les actions de l'utilisateur à une mise en position et son enregistrement. Cependant, les moyens de verrouillage utilisés actuellement étant de faible taille, les distances séparant les deuxième, troisième et quatrième positions sont réduites. De ce fait, ce procédé ne permet pas de s'assurer que la position définie par l'utilisateur soit suffisamment éloignée de la position d'arrêt dans les moyens de verrouillage où l'élément enroulable vient en butée, ou suffisamment éloignée de la position de sortie des moyens de verrouillage.

Or, ceci a son importance car lors des cycles de déplacement et d'inversions de sens dans les moyens de verrouillage, on fait intervenir des détecteurs ou capteurs de couple dont l'activation nécessite une durée de mise en route. Cela tient notamment au fait qu'un pic de couple au démarrage du moteur est souvent plus élevé que des seuils prédéfinis caractéristiques d'un obstacle ou d'une arrivée du volet en butée, et/ou au fait que la valeur de détection comparable au seuil est obtenue à partir d'un ensemble de mesures lors du fonctionnement du moteur. Ainsi, un délai allant jusqu'à 500ms peut survenir entre un démarrage de l'actionneur et l'activation des détecteurs de couple de l'actionneur. Par conséquent, il est souhaitable que la position d'inversion de sens enregistrée soit suffisamment éloignée de la position d'arrêt dans les moyens de verrouillage pour éviter que la lame inférieure du volet ne se trouve prématurément en butée dans les moyens de verrouillage alors que l'actionneur est en cours de fonctionnement, la détection de couple n'étant pas encore active ou opérationnelle, et n'exerce ainsi des efforts importants sur les moyens de verrouillage pouvant les endommager.

A l'inverse, au cours de la vie du volet, les articulations reliant les lames du tablier peuvent se détendre. De ce fait, si la position d'inversion de sens enregistrée par l'utilisateur se trouve trop proche de la position de sortie des moyens de verrouillage, une partie ou toute la lame inférieure pourrait finir par sortir des moyens de verrouillage. Il est donc également souhaitable de s'assurer que la position d'inversion de sens soit choisie de sorte qu'elle soit suffisamment éloignée de la position de sortie des moyens de verrouillage.

Par ailleurs, les dimensions des moyens de verrouillage peuvent être variables et les durées d'activation des détections de couple peuvent également différer d'un actionneur à un autre. Il est donc nécessaire de pouvoir adapter les réglages à chaque installation.

L'invention a pour but de remédier à ces inconvénients en proposant un procédé de réglage d'une installation d'un d'élément enroulable motorisé comprenant un élément enroulable sur un tube d'enroulement, et au moins un moyen de verrouillage de l'extrémité libre de l'élément enroulable définissant une position dite verrouillée dans le sens de l'enroulement, le verrouillage étant activé dans le sens de l'enroulement si l'extrémité libre du tablier atteint préalablement au moins une position d'inversion, située au-delà de la position verrouillée dans le sens du déroulement du tablier,
dans lequel un installateur procède à l'enregistrement d'une première position d'inversion de rotation candidate, cette position étant située au niveau ou au-delà de la position d'inversion de rotation, dans le sens de déroulement de l'élément enroulable,
**caractérisé en ce que,** après l'enregistrement de la première position d'inversion de rotation candidate, l'élément enroulable est entraîné dans le sens de l'enroulement jusqu'à la position verrouillée, puis, la séquence suivante est effectuée :
a) l'élément enroulable est entraîné dans le sens du déroulement jusqu'à une position d'inversion de rotation candidate décalée par rapport à la première position d'inversion de rotation candidate,
b) l'élément enroulable est entraîné dans le sens de l'enroulement vers la position verrouillée,
la séquence a), b) étant répétée jusqu'à ce que l'extrémité libre de l'élément enroulable entraînée dans le sens de déroulement dépasse une position dite position de sortie, au-delà de laquelle le verrouillage de l'élément enroulable n'est plus activé lorsque l'élément enroulable est entraîné dans le sens de l'enroulement.

Grâce à la répétition de la séquence a)-b), il est possible de tester des positions d'inversion de rotation candidates plus basses que celle ayant été initialement définie par l'utilisateur. Ainsi, l'on peut choisir parmi les positions candidates celle se trouvant à la fois suffisamment éloignée de la position de sortie et de la position de butée.

Selon un mode de réalisation préféré de l'invention, chaque position d'inversion de rotation candidate est enregistrée dans une mémoire d'une unité de commande de l'installation d'élément enroulable motorisé.

De la même manière, les distances entre les positions d'inversion de rotation candidates et la position verrouillée sont mises en mémoire et associées à ces positions d'inversion de rotation. Il est ainsi possible, à partir de ces données mémorisées, de déterminer facilement une position d'inversion de rotation optimale.

Selon un mode de réalisation préféré de l'invention, afin de faciliter l'automatisation de l'itération de la séquence a)-b), chaque position d'inversion de rotation candidate d'une nouvelle itération de la séquence est située à une distance prédéterminée d de la précédente position d'inversion de rotation candidate.

Selon un mode de réalisation préféré de l'invention, l'interruption de l'itération de la séquence a)-b) est décidée par détection d'une absence d'obstacle lors de l'enroulement de l'élément enroulable au niveau de la position verrouillée ou pendant une durée prédéterminée à partir du démarrage de l'enroulement.

De manière à détecter la position verrouillée de façon simple et rapide, la valeur de position angulaire du tube d'enroulement correspondant à la position verrouillée est déterminée à l'aide d'un détecteur ou capteur de position du tube d'enroulement ou à l'aide d'un compteur de temps.

De préférence, la position verrouillée est enregistrée par une mémoire d'une unité de commande de l'installation d'écran motorisé après détection de la valeur de position angulaire du tube d'enroulement correspondant à la position verrouillée.

De manière à détecter la position verrouillée de façon simple et rapide, la valeur de position angulaire du tube d'enroulement correspondant à la position de sortie est mesurée à l'aide d'un capteur de couple d'entraînement de l'élément enroulable, par exemple d'un tablier.

De préférence, la position de sortie est enregistrée par une mémoire d'une unité de commande de l'installation d'écran motorisé après détection de la valeur de position angulaire du tube d'enroulement correspondant à la position de sortie.

L'invention concerne également un dispositif d'élément enroulable motorisé comprenant un élément enroulable sur un tube d'enroulement, et au moins un moyen de verrouillage ou des moyens de verrouillage de l'extrémité libre de l'élément enroulable définissant une position dite verrouillée dans le sens de l'enroulement, le verrouillage n'étant activé dans ce sens que si l'extrémité libre de l'élément enroulable atteint préalablement au moins une position d'inversion, à laquelle correspond pour le déroulement une valeur de position angulaire du tube d'enroulement dite position d'inversion de rotation, située au-delà de la position verrouillée dans le sens du déroulement de l'élément enroulable, **caractérisé en ce qu'il** comprend des moyens matériels et logiciels pour la mise en œuvre du procédé de fonctionnement selon l'invention.

De préférence, le dispositif d'élément enroulable motorisé comprend un capteur de couple d'entraînement de l'élément enroulable.

D'autres caractéristiques et avantages de l'invention ressortiront à la lecture de la description qui suit, en référence aux figures annexées, dans laquelle :
- la figure 1 est une vue schématique de face d'une installation de volant roulant motorisé permettant de mettre en œuvre le procédé de réglage selon l'invention ;
- la figure 2 est une vue d'un détail de la figure 1 ;
- la figure 3 est une vue de côté de moyens de verrouillage de l'installation de la figure 1 ;
- la figure 4 est un schéma illustrant les correspondances entre les positions angulaires du tube d'enroulement de la figure 1 et des positions de l'extrémité libre de l'élément enroulable de la figure 1 ;
- la figure 5 est un schéma illustrant les positions de l'extrémité libre de l'élément enroulable de la figure 1 définies par une exécution du procédé de réglage selon l'invention ;
- la figure 6 est un schéma illustrant une procédure d'exécution du procédé de réglage selon l'invention.

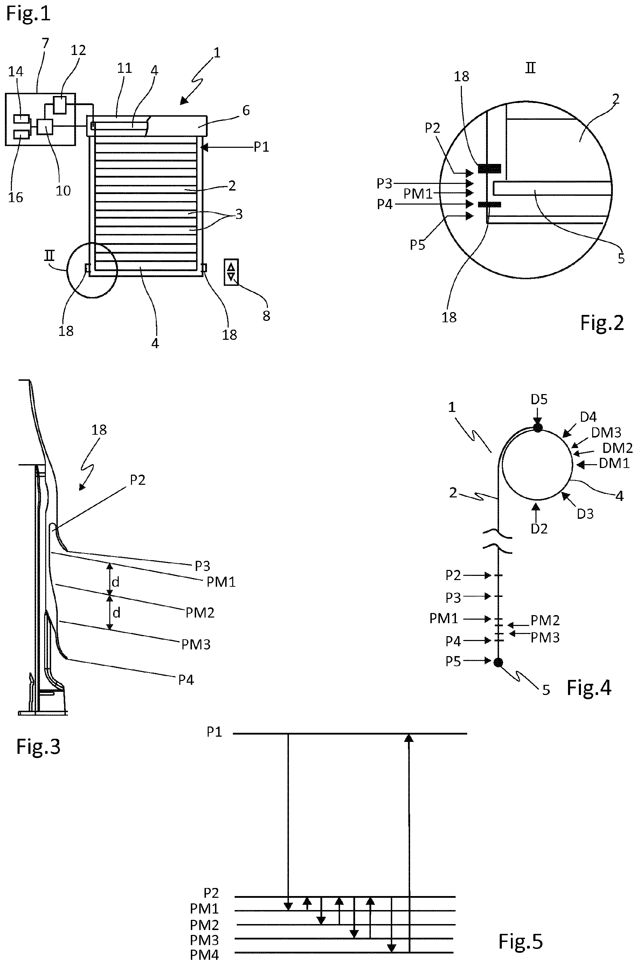

Un dispositif d'élément enroulable motorisé 1 est représenté à la figure 1. Ce dispositif comprend un élément enroulable 2, par exemple un tablier de volet roulant composé d'une pluralité de lames articulées 3. De préférence, le tablier 2 est constitué de lames 3 empilables, les lames 3 étant reliées entre elles par des parties ajourées escamotables dès que les lames 3 reposent les unes sur les autres. Le tablier 2 est lié, à une de ses extrémités, dite extrémité supérieure, à un tube d'enroulement 4. A l'autre extrémité libre du tablier 2, dite extrémité inférieure, une lame inférieure 5 est guidée par des rails de guidage disposés de part et d'autre d'une ouverture dans un bâtiment, le tablier 2 étant destiné à recouvrir l'ouverture lorsqu'il est fermé. Le tube d'enroulement 4 est de préférence monté au-dessus de l'ouverture que le tablier 2 est destiné à recouvrir. Le tablier 2 vient de préférence s'enrouler dans un caisson 6 destiné à le protéger.

L'élément enroulable 2 peut notamment consister en un élément de fermeture, d'occultation ou de protection solaire. Dans l'exemple représenté sur les figures, il s'agit d'un tablier 2 composé de lames articulées 3, mais il pourrait également s'agir d'une toile. Dans ce cas, la lame inférieure 5 est remplacée par une barre de charge.

Les déplacements du tablier 2 sont commandés par les déplacements de rotation du tube d'enroulement 4, dont l'entraînement est assuré par exemple à l'aide d'un motoréducteur tubulaire (non représenté) disposé à l'intérieur du tube d'enroulement 4. Les mouvements du motoréducteur sont commandés par une unité de commande 7 liée au motoréducteur et à une interface utilisateur 8 par le biais de laquelle un utilisateur peut commander les mouvements du tablier 2. L'interface utilisateur 8 peut être reliée à l'unité de commande 7 par des moyens de communication filaire ou non filaire tels que des ondes radioélectriques ou des rayons infrarouges.

L'unité de commande 7 comprend un détecteur ou capteur 10 de position angulaire du tube d'enroulement 4, un détecteur ou capteur de couple 12 exercé par le motoréducteur pour détecter des obstacles et/ou les fins de course. L'unité de commande 7 comprend notamment une unité logique de traitement 14 et une mémoire 16.

On notera que dans ce qui suit, on considère que le tablier 2 se déroule vers le bas, notamment sous l'effet de son propre poids. Dans le cas d'un store, il se déroule sous l'effet du poids de sa barre de charge. D'autres configurations sont toutefois évidemment possibles.

Une première position P1 de la barre de charge ou de l'extrémité libre de l'élément correspond à une position d'ouverture complète du tablier 2. A cette position correspond une position angulaire D1 du tube d'enroulement 4, comme représenté à la figure 4.

Le long des rails de guidage disposés de part et d'autre de l'ouverture, le l'installation 1 comprend des moyens de verrouillage 18. Les moyens de verrouillage 18 coopèrent avec les extrémités de la lame inférieure 5, en particulier avec des ergots fixés élastiquement aux extrémités de la lame finale (non représentés). Ces moyens de verrouillage 18, représentés à la figure 3, déterminent, comme représenté à la figure 2, une deuxième position P2 de la lame inférieure 5, une troisième position P3 de la lame inférieure 5 et une quatrième position P4 de la lame inférieure 5. Le fonctionnement de tels moyens de verrouillage 8, connus de l'art antérieur, est notamment décrit, en référence à la figure 3, dans le deuxième mode de réalisation de la demande de brevet FR 3 009 577.. Lors d'un mouvement de descente, en rencontrant une première rampe, l'ergot est repoussé en direction de la lame finale contre un effort élastique. Au franchissement de cette rampe, l'ergot reprend sa position de repos. Si le mouvement se poursuit, l'ergot rencontre une deuxième rampe ou rampe inférieure qui de nouveau le déplace vers la lame finale. Après avoir franchi cette rampe inférieure, l'ergot revient dans sa position de repos. La descente du tablier se poursuit normalement jusqu'au seuil.

La deuxième position P2 est une position dite verrouillée dans laquelle le tablier 2 est bloqué lors d'un mouvement de montée (ou enroulement). La deuxième position P2 correspond à une position angulaire verrouillée D2 du tube d'enroulement 4.

La troisième position P3 est une position d'entrée des moyens de verrouillage. Lorsque la lame inférieure 5 dépasse cette position P3 dans le sens du déroulement du tablier 2 et qu'ensuite un mouvement d'enroulement de l'élément est commandé, le tablier 2 se retrouve bloqué sous la première rampe, la lame inférieure 5 se retrouvant en position P2 et le tube d'enroulement en position D2. Cette position P3 correspond à une position angulaire d'inversion D3 du tube d'enroulement 4.

La quatrième position P4 est une position dite de sortie des moyens de verrouillage en dessous de laquelle la lame inférieure 5, ayant été verrouillée, doit venir afin que le tablier 2 puisse de nouveau être enroulé jusqu'à atteindre sa position d'ouverture totale P1. Cette position correspond à une position angulaire de sortie D4 du tube d'enroulement 4. La position P4 est une position inférieure à la position P3, cette position P3 étant inférieure à la position P2.

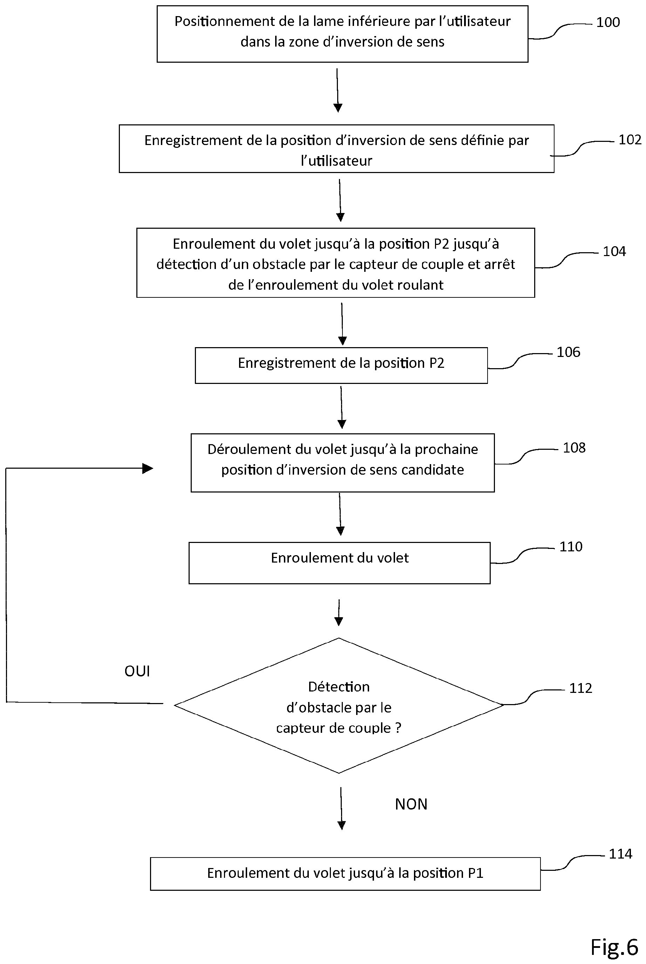

On va maintenant décrire une procédure d'exécution du procédé de réglage selon l'invention en référence aux figures 3 à 6.

Au cours d'une première étape 100, l'utilisateur vient placer la lame inférieure 5 au niveau des moyens de verrouillage 18, plus précisément dans une zone dite zone d'inversion de sens, correspond notamment à la zone comprise entre la position d'entrée P3 et la position de sortie P4. Dans cette zone d'inversion de sens, une inversion du sens de déplacement de la lame inférieure 5, d'un mouvement de descente à un mouvement de montée, provoque un blocage de la lame inférieure 5 dans les moyens de verrouillage 18. Hors de cette zone, l'inversion de sens de déplacement de la lame inférieure 5 ne produit pas d'effet particulier. La lame inférieure 5 peut notamment traverser les moyens de verrouillage 18 dans le sens de la descente comme dans le sens de la montée sans être verrouillée s'il ne se produit pas d'inversion de son sens de déplacement entre les positions P3 et P4.

La zone d'inversion de sens entre P3 et P4 est de faible dimension par rapport à la hauteur du volet roulant. Par ailleurs, les moyens de verrouillage sont disposés et masqués par les coulisses et par le tablier lui-même lors de cette première étape. L'installateur peut donc être contraint d'atteindre la zone d'inversion par tâtonnements, en s'assurant notamment de bien positionner la lame finale entre ces positions P3 et P4, sans que les ergots ne ressortent des moyens de verrouillage. Ces tâtonnements peuvent notamment correspondre à des petits mouvements de descente et de montée de la lame inférieure dans une zone proche du seuil de l'ouverture.

La position choisie par l'utilisateur dans la zone d'inversion de sens, ou première position d'inversion de rotation candidate PM1, est située au niveau ou au-delà de la position d'inversion de rotation, dans le sens de déroulement du tablier 2. Elle correspond à une position angulaire DM1.

Une fois que la lame inférieure 5 se trouve dans la zone recherchée, au cours d'une étape 102, la position PM1 est enregistrée. L'enregistrement de la valeur de la position angulaire DM1 (et donc de PM1), peut être effectuée via une commande manuelle de l'utilisateur, par exemple par appui sur une combinaison particulière de touches de l'interface utilisateur 8. PM1 est alors enregistrée dans la mémoire 16 de l'unité de commande 7.

Après l'enregistrement de la première position d'inversion de rotation candidate PM1, au cours d'une étape 104 déclenchée de préférence automatiquement, le tablier 2 est entraîné dans le sens de l'enroulement jusqu'à la position verrouillée P2. A cet effet, une alimentation du motoréducteur est commandée provoquant l'enroulement du tablier 2 et par conséquent la montée de la lame inférieure 5. Dans une variante, l'étape 104 pourrait également faire suite à une action de l'installateur.

Une fois la lame inférieure 5 bloquée dans les moyens de verrouillage 18, au cours d'une étape 106, la deuxième position P2 est détectée par le capteur de couple 12, par exemple par détection d'un surcouple, et l'alimentation du motoréducteur est coupée. La valeur de position angulaire D2 du tube d'enroulement 4 correspondant à la position P2 de la lame inférieure est alors enregistrée en mémoire dans l'unité de commande 7. On notera que la valeur de P2 enregistrée peut correspondre à une position légèrement inférieure à la position de blocage de la lame inférieure 5, de manière à ce qu'une fois dans le mode d'utilisation, lorsqu'un utilisateur commande la fermeture du tablier 2, la lame inférieure 5 ne vienne pas en butée en exerçant des efforts importants sur les moyens de verrouillage 18.

Après enregistrement de la position P2, une séquence itérative est initiée. Cette séquence comprend au moins deux étapes a) et b).

Au cours de l'étape a), ou 108 telle que représentée sur le schéma de la figure 5, le tablier 2 est entraîné dans le sens du déroulement jusqu'à une deuxième position d'inversion de rotation candidate PM2 située au-delà de la première position d'inversion de rotation PM1 dans le sens du déroulement du tablier 2. A cet effet, il peut être prévu qu'à la suite de l'enregistrement de PM2, une alimentation du motoréducteur est commandée provoquant le déroulement du tablier 2 et par conséquent la descente de la lame inférieure 5. Dans une variante, cette étape pourrait également faire suite à une action de l'installateur. Au cours de cette étape peut également être enregistrée la distance ou le temps de déplacement entre les positions PM1 et P2.

De préférence, une deuxième position d'inversion de rotation candidate d'une nouvelle itération de la séquence est située à une distance prédéterminée d de la première position d'inversion de rotation candidate. Ainsi, comme illustré à la figure 3, la deuxième position d'inversion de rotation PM2 est située à une distance d prédéterminée de la première position d'inversion de rotation candidate PM1. En pratique, l'installation d'écran motorisé 1 commande le déroulement du tablier 2 selon une rotation permettant à la lame inférieure 5 d'atteindre, depuis la position de verrouillage P2, la position PM1-d dans le sens du déroulement. La distance d est choisie avantageusement en fonction de dimensions générales standards des moyens de verrouillage. De manière générale, chaque position d'inversion de rotation candidate d'une nouvelle itération de la séquence est située à une distance prédéterminée d de la précédente position d'inversion de rotation candidate.

La position d'inversion de rotation candidate PM2 définie par l'unité électronique de commande 7 est mise en mémoire 16 de l'unité de commande 7.

Puis, au cours de l'étape b), ou 110 telle que représentée sur le schéma de la figure 5, le tablier 2 est à nouveau entraîné dans le sens de l'enroulement jusqu'à la position verrouillée P2. La position d'inversion de rotation candidate PM2 peut alors être associée à la distance ou au temps de déplacement entre les positions PM2 et P2.

La séquence a), b) est ensuite répétée jusqu'à ce que l'extrémité libre de l'écran, à savoir la lame inférieure 5 du tablier 2, dépasse la position de sortie P4, au-delà de laquelle le verrouillage de l'élément enroulable 2 n'est plus activé lorsque l'élément enroulable 2 est entraîné dans le sens de l'enroulement.

Dans l'exemple d'application du mode de réalisation du procédé illustré à la figure 3, le tablier 2 est entraîné dans le sens du déroulement jusqu'à une troisième position d'inversion de rotation candidate PM3 située au-delà de première position d'inversion de rotation PM1 dans le sens du déroulement du tablier 2. La troisième position d'inversion de rotation candidate PM3 est située à une distance d de la précédente position d'inversion candidate PM2, c'est-à-dire à une distance 2d de la première position d'inversion candidate PM1.

La position PM3 est alors enregistrée dans la mémoire 16 de l'unité de commande 7 et l'étape b) se reproduit également : l'enroulement du tablier 2 est effectuée jusqu'à ce que la lame inférieure 5 se retrouve dans la position P2.

Puis, dans l'exemple illustré à la figure 3, la lame inférieure 5 est déplacée jusqu'à une quatrième position PM4 équivalente à PM3-d. En l'occurrence, cette position, se trouve au-delà de la position de sortie P4. De ce fait, lors de la remontée du tablier 2, aucun obstacle n'est plus détecté au niveau de P2 car le tablier 2 devient libre de remonter vers la position P1 sans être stoppé par les moyens de verrouillage 18. Au cours de l'étape 112, cette absence de détection d'obstacle au-delà de P2 dans le sens de l'enroulement permet de décider l'interruption de l'itération de la séquence a)-b). Cette quatrième position PM4 n'est donc pas considérée comme une position d'inversion de rotation candidate. Puis, au cours d'une étape 114, l'enroulement de l'élément enroulable 2 se poursuit et la lame inférieure 5 remonte jusqu'à la position P1.

Tant qu'un obstacle est détecté au niveau de P2 lors de la remontée du tablier 2 lors de l'étape b) (étape 110), l'itération de la séquence a)-b) se poursuit. Dans une variante, ou en complément de l'étape 112, la décision de l'interruption de la séquence a)-b) peut être prise après que se soit écoulée une durée prédéterminée à partir du démarrage de l'enroulement.

L'interruption de l'itération séquence a)-b) après une ou plusieurs itération permet de valider la configuration du dispositif. La valeur de position angulaire D4 du tube d'enroulement correspondant à la position P4 est alors automatiquement définie à partir de la dernière position d'inversion de rotation, dans l'exemple ci-dessus la position PM4 avant l'interruption de la séquence a)-b).

Grâce à l'enregistrement des différentes positions d'inversion de rotations candidates PM1, PM2, PM3, notamment associées aux distances entre ces positions et la position P2, on peut choisir parmi celles-ci la position la plus adéquate ou optimale, à savoir n'étant ni trop proche de P2, ni trop proche de P4. Il peut par exemple s'agir dans l'exemple représenté sur les figures de PM2. On peut également sélectionner une position d'inversion de rotation optimale comme étant une position intermédiaire entre deux positions candidates préalablement enregistrées. Alternativement, la dernière position d'inversion de rotation candidate peut être sélectionnée comme position d'inversion de rotation optimale.

La valeur de la position optimale retenue est utilisée dans le mode d'utilisation de l'installation d'écran motorisé 1. En effet, lorsque l'utilisateur envoie à l'installation d'écran motorisé 1, en position ouverture, un ordre de positionnement en ventilation sécurisée, l'installation d'écran motorisé 1 exécute tout d'abord une action de rotation du tube d'enroulement 4 dans le sens du déroulement du tablier 2. Puis, lorsque le capteur de position 10 détecte que le tube d'enroulement 4 a atteint la position optimale correspondant au fait que la lame inférieure 5 se trouve en position optimale, l'installation d'écran motorisé 1 exécute une action d'arrêt du mouvement de rotation du tube d'enroulement 4. L'installation d'écran motorisé 1 exécute alors immédiatement une action de rotation du tube d'enroulement 4 dans le sens de l'enroulement jusqu'à ce que la position D2 soit atteinte, signifiant que la lame inférieure 5 se trouve verrouillée en position P2 et donc que le tablier a atteint la position de ventilation sécurisée demandée.

Naturellement, les exemples représentés sur les figures et discutés ci-dessus ne sont donnés qu'à titre illustratif et non limitatif. Diverses variantes sont envisageables.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Procédé de réglage d'une installation d'un d'élément enroulable (1) motorisé comprenant un élément enroulable (2) enroulable sur un tube d'enroulement (4), et au moins un moyen de verrouillage (18) de l'extrémité libre (5) de l'élément enroulable (2) définissant une position dite verrouillée (P2) dans le sens de l'enroulement, le verrouillage étant activé dans le sens de l'enroulement si l'extrémité libre (5) du tablier atteint préalablement au moins une position d'inversion (P3), située au-delà de la position verrouillée (P2) dans le sens du déroulement du tablier,
dans lequel un installateur procède à l'enregistrement de la valeur d'une première position d'inversion de rotation candidate (PM1), cette position étant située au niveau ou au-delà de la position d'inversion de rotation (D3), dans le sens de déroulement de l'élément enroulable (2),
**caractérisé en ce que,** après enregistrement de la première position d'inversion de rotation candidate (PM1), l'élément enroulable est entraîné dans le sens de l'enroulement jusqu'à la position verrouillée (P2), puis, la séquence suivante est effectuée :
a) l'élément enroulable (2) est entraîné dans le sens du déroulement jusqu'à une position d'inversion de rotation candidate (PM2, PM3) décalée par rapport à la première position d'inversion de rotation candidate (PM1),
b) l'élément enroulable (2) est entraîné dans le sens de l'enroulement jusqu'à la position verrouillée (P2),
la séquence a), b) étant répétée jusqu'à ce que l'extrémité libre (5) de l'élément enroulable entraînée dans le sens de déroulement dépasse une position dite position de sortie (P4), au-delà de laquelle le verrouillage de l'élément enroulable (2) n'est plus activé lorsque l'élément enroulable (2) est entraîné dans le sens de l'enroulement.

2. Procédé de réglage selon l'une quelconque des revendications précédentes, dans lequel chaque position d'inversion de rotation candidate (PM1, PM2, PM3) est enregistrée dans une mémoire (16) d'une unité de commande de l'installation d'élément enroulable motorisé (1).

3. Procédé de réglage selon l'une quelconque des revendications précédentes, dans lequel les distances entre les positions d'inversion de rotation candidates (PM1, PM2, PM3) et la position verrouillée (P2) sont mises en mémoire et associées à ces positions d'inversion de rotation candidates (PM1, PM2, PM3).

4. Procédé de réglage selon l'une quelconque des revendications précédentes, dans lequel chaque position d'inversion de rotation candidate (PM2, PM3) d'une nouvelle itération de la séquence est située à une distance prédéterminée d de la précédente position d'inversion de rotation candidate (PM1, PM2, PM3).

5. Procédé de réglage selon l'une quelconque des revendications précédentes, dans lequel l'interruption de l'itération de la séquence a)-b) est décidée par détection d'une absence d'obstacle lors de l'enroulement de l'élément enroulable (2) au niveau de la position verrouillée (P2) ou après une durée prédéterminée à partir du démarrage de l'enroulement.

6. Procédé de réglage selon l'une quelconque des revendications précédentes, dans lequel la valeur de la position angulaire du tube d'enroulement correspondant à la position verrouillée est déterminée à l'aide d'un détecteur ou capteur de position du tube d'enroulement ou à l'aide d'un compteur de temps.

7. Procédé de réglage selon l'une quelconque des revendications précédentes, dans lequel la position verrouillée (P2) est enregistrée par une mémoire (16) d'une unité de commande (7) de l'installation d'écran motorisé (1) après détection d'une valeur de position angulaire du tube d'enroulement (D2) correspondant à la position verrouillée (P2).

8. Procédé de réglage selon l'une quelconque des revendications précédentes, dans lequel une valeur de position angulaire du tube d'enroulement (D4) correspondant à la position de sortie (P4) est mesurée par un capteur de couple (12) d'entraînement de l'élément enroulable.

9. Procédé de réglage selon la revendication 8, dans lequel la position de sortie (P4) est enregistrée par une mémoire (16) d'une unité de commande (7) de l'installation d'écran motorisé (1) après détection de la valeur de position angulaire du tube d'enroulement (D2) correspondant à la position verrouillée (P4).

10. Dispositif d'élément enroulable motorisé (1) comprenant un élément enroulable (2), enroulable sur un tube d'enroulement (4), et des moyens de verrouillage (18) de l'extrémité libre (4) de l'élément enroulable (2) définissant une position dite verrouillée (P2) dans le sens de l'enroulement, le verrouillage n'étant activé dans ce sens que si l'extrémité libre (4) de l'élément enroulable (2) atteint préalablement au moins une position d'inversion (P3), à laquelle correspond pour le déroulement une valeur de position angulaire du tube d'enroulement (4) dite position d'inversion de rotation (D3), située au-delà de la position verrouillée (P2) dans le sens du déroulement de l'élément enroulable (2), **caractérisé en ce qu'**il comprend des moyens matériels (7, 8, 10, 12, 14, 16) et logiciels pour la mise en œuvre du procédé de fonctionnement selon l'une des revendications précédentes.

11. Dispositif d'élément enroulable motorisé selon la revendication 10, **caractérisé en ce qu'**il comprend un capteur de couple (12) d'entraînement de l'élément enroulable (2).

## Patentansprüche

1. Verfahren zum Regeln einer Installation eines motorisierten Rollelements (1), umfassend ein Rollelement (2), das auf ein Aufrollrohr (4) aufgerollt werden kann, und mindestens ein Verriegelungsmittel (18) am freien Ende (5) des Rollelements (2), das eine verriegelte Stellung (P2) in Aufrollrichtung definiert, wobei die Verriegelung in Aufrollrichtung aktiviert wird, wenn das freie Ende (5) des Behangs vorher mindestens eine Umkehrstellung (P3) jenseits der verriegelten Stellung (P2) in Abrollrichtung des Behangs erreicht,
wobei ein Installateur den Wert einer ersten in Frage kommenden rotativen Umkehrstellung (PM1) aufzeichnet, wobei diese Stellung in Abrollrichtung des Rollelements (2) auf Höhe oder jenseits der rotativen Umkehrstellung (D3) angeordnet ist,
**dadurch gekennzeichnet, dass** das Rollelement nach der Aufzeichnung der ersten in Frage kommenden rotativen Umkehrstellung (PM1) in Aufrollrichtung in die verriegelte Stellung (P2) versetzt wird und anschließend folgende Schrittfolge ausgeführt wird:
a) Bewegen des Rollelements (2) in Abrollrichtung in eine in Frage kommende rotative Umkehrstellung (PM2, MP3), die gegenüber der ersten in Frage kommenden rotativen Umkehrstellung (PM1) verschoben ist,
b) Bewegen des Rollelements (2) in Aufrollrichtung bis zur verriegelten Stellung (P2), wobei die Schrittfolge a), b) solange wiederholt wird, bis das freie Ende (5) des in Aufrollrichtung bewegten Rollelements über eine Austrittsstellung (P4) hinausgeht, jenseits derer die Verriegelung des Rollelements (2) nicht mehr aktiviert wird, wenn das Rollelement (2) in Aufrollrichtung bewegt wird.

2. Verfahren nach einem der vorstehenden Ansprüche, wobei jede in Frage kommende rotative Umkehrstellung (PM1, PM2, PM3) in einem Speicher (16) einer Steuerung der Installation des motorisierten Rollelements (1) aufgezeichnet wird.

3. Verfahren nach einem der vorstehenden Ansprüche, wobei die Abstände zwischen den in Frage kommenden rotativen Umkehrstellungen (PM1, PM2, PM3) und der verriegelten Stellung (P2) gespeichert werden und diesen in Frage kommenden rotativen Umkehrstellungen (PM1, PM2, PM3) zugeordnet werden.

4. Verfahren nach einem der vorstehenden Ansprüche, wobei jede in Frage kommende rotative Umkehrstellung (PM2, PM3) einer neuen Iteration der Schrittfolge in einem vorgegebenen Abstand d zur vorigen in Frage kommenden rotativen Umkehrstellung (PM1, PM2, PM3) liegt.

5. Verfahren nach einem der vorstehenden Ansprüche, wobei in Abhängigkeit von der Erkennung eines Nichtvorhandenseins von Hindernissen beim Aufrollen des Rollelements (2) auf Höhe der verriegelten Stellung (P2) oder nach einer vorgegebenen Zeit ab Beginn des Aufrollens über die Unterbrechung der Schrittfolge a), b) entschieden wird.

6. Verfahren nach einem der vorstehenden Ansprüche, wobei der Wert der der verriegelten Stellung entsprechenden Winkellage des Aufrollrohrs mithilfe eines Positionsdetektors oder -sensors des Aufrollrohrs oder eines Zeitzählers bestimmt wird.

7. Verfahren nach einem der vorstehenden Ansprüche, wobei die verriegelte Stellung (P2) nach der Erkennung eines der verriegelten Stellung (P2) entsprechenden Winkellagewerts des Aufrollrohrs (D2) von einem Speicher (16) einer Steuerung (7) der Installation der Motorleinwand (1) aufgezeichnet wird.

8. Verfahren nach einem der vorstehenden Ansprüche, wobei ein der Austrittsstellung (P4) entsprechender Winkellagewert des Aufrollrohrs (D4) von einem Drehmomentsensor (12) des Rollelements gemessen wird.

9. Verfahren nach Anspruch 8, wobei die Austrittsstellung (P4) nach der Erkennung des der verriegelten Stellung (P4) entsprechenden Winkellagewerts des Aufrollrohrs (D2) von einem Speicher (16) einer Steuerung (7) der Installation der Motorleinwand (1) aufgezeichnet wird.

10. Motorisierte Rollelementvorrichtung (1), umfassend ein Rollelement (2), das auf ein Aufrollrohr (4) aufgerollt werden kann, und Verriegelungsmittel (18) zur Verriegelung des freien Endes (4) des Rollelements (2), die eine verriegelte Stellung (P2) in Aufrollrichtung definieren, wobei die Verriegelung nur dann in dieser Richtung aktiviert wird, wenn das freie Ende (4) des Rollelements (2) vorher mindestens eine Umkehrstellung (P3) erreicht, der beim Abrollen ein als rotative Umkehrstellung (D3) bezeichneter Winkellagewert des Aufrollrohrs (4) entspricht, der sich jenseits der verriegelten Stellung (P2) in Abrollrichtung des Rollelements (2) befindet, **dadurch gekennzeichnet, dass** sie Hardware (7, 8, 10, 12, 14, 16) und Software zur Ausführung des Verfahrens nach einem der vorstehenden Ansprüche umfasst.

11. Vorrichtung nach Anspruch 10, **dadurch gekennzeichnet, dass** sie einen Drehmomentsensor (12) für das Rollelement (2) umfasst.

## Claims

1. A method for adjusting an installation of a motorized windable element (1) comprising a windable element (2) able to be wound on a winding tube (4), and at least one locking means (18) for locking the free end (5) of the windable element (2) defining a so-called locked position (P2) in the direction of the winding, the locking being activated in the direction of the winding if the free end (5) of the apron reaches at least one reversal position (P3) beforehand, located past the locked position (P2) in the unwinding direction of the apron,
in which an installer records the value of a first candidate rotation reversal position (PM1), this position being located at or past the rotation reversal position (D3), in the unwinding direction of the windable element (2),
**characterized in that,** after recording the first candidate rotation reversal position (PM1), the windable element is driven in the direction of the winding to the locked position (P2), then the following sequence is carried out:
a) the windable element (2) is driven in the unwinding direction to a candidate rotation reversal position (PM2, PM3) that is offset relative to the first candidate rotation reversal position (PM1),
b) the windable element (2) is driven in the direction of the winding to the locked position (P2), the sequence a), b) being repeated until the free end (5) of the windable element driven in the unwinding direction exceeds a position called deployed position (P4), past which the locking of the windable element (2) is no longer activated when the windable element (2) is driven in the winding direction.

2. The adjusting method according to any one of the preceding claims, wherein each candidate rotation reversal position (PM1, PM2, PM3) is recorded in a memory (16) of a control unit of the motorized windable element installation (1).

3. The adjusting method according to any one of the preceding claims, wherein the distances between the candidate rotation reversal positions (PM1, PM2, PM3) and the locked position (P2) are placed in memory and associated with these candidate rotation reversal positions (PM1, PM2, PM3).

4. The adjusting method according to any one of the preceding claims, wherein each candidate rotation reversal position (PM2, PM3) of a new iteration of the sequence is located at a predetermined distance d from the previous candidate rotation inversion position (PM1, PM2, PM3).

5. The adjusting method according to any one of the preceding claims, wherein the interruption of the iteration of the sequence a)-b) is decided by detection of an absence of obstacle during the winding of the windable element (2) in the locked position (P2) or after a predetermined duration from the beginning of the winding.

6. The adjusting method according to any one of the preceding claims, wherein the value of the angular position of the winding tube corresponding to the locked position is determined using a position detector or sensor of the winding tube or using a time counter.

7. The adjusting method according to any one of the preceding claims, wherein the locked position (P2) is recorded by a memory (16) of a control unit (7) of the motorized screen installation (1) after detecting an angular position value of the winding tube (D2) corresponding to the locked position (P2).

8. The adjusting method according to any one of the preceding claims, wherein an angular position value of the winding tube (D4) corresponding to the deployed position (P4) is measured by a torque sensor (12) for driving of the windable element.

9. The adjusting method according to claim 8, wherein the deployed position (P4) is recorded by a memory (16) of a control unit (7) of the motorized screen installation (1) after detection of the angular position value of the winding tube (D2) corresponding to the locked position (P4).

10. A motorized windable element (1) device comprising a windable element (2), windable on a winding tube (4), and locking means (18) for locking the free end (4) of the windable element (2) defining a so-called locked position (P2) in the winding direction, the locking only being activated in this direction if the free end (4) of the windable element (2) reaches at least one reversal position (P3) beforehand, to which corresponds, for the unwinding, an angular position value of the winding tube (4) called rotation reversal position (D3), located past the locked position (P2) in the direction of the unwinding of the windable element (2), **characterized in that** it comprises hardware (7, 8, 10, 12, 14, 16) and software means for carrying out the operating method according to one of the preceding claims.

11. The motorized windable element device according to claim 10, **characterized in that** it comprises a torque sensor (12) for driving of the windable element (2).
